# EUROPÄISCHE PATENTANMELDUNG

(11) **EP 3 935 987 A1**
(43) Veröffentlichungstag der Anmeldung: **12.01.2022**
(21) Anmeldenummer: 21184719.9
(22) Anmeldetag: 09.07.2021
(51) Int. Cl.: A43B 13/12, A43B 13/22, B29D 35/12

(54) **SNEAKER UND SCHUHSOHLE FÜR EINEN SNEAKER**

(30) Priorität: 10.07.2020 DE 202020104017 U
(71) Anmelder: EOD European Online Distribution GmbH, 79111 Freiburg (DE)
(72) Erfinder: HERZOG, Götz Alexander, 79115 Freiburg (DE)
(74) Vertreter: Bittner, Thomas L.

(57) **Zusammenfassung**

Die Erfindung betrifft einen Sneaker (1) mit einem Oberteil (3) und einer Schuhsohle (2), die mit dem Oberteil (3) verbunden ist und eine Laufsohle (4) aufweist, die aus einem geschäumten thermoplastischen Polyurethanmaterial mit einer Shore-Härte A im Bereich von etwa 25 bis etwa 55 besteht. Des Weiteren ist eine Schuhsohle (2) offenbart. (Fig. 1)

## Beschreibung

Die Erfindung betrifft einen Sneaker sowie eine Schuhsohle für einen Sneaker.

### Hintergrund

Sneaker in dem hier verwendeten Sinne betrifft im Alltag getragene, sportlich aussehende Halbschuhe (Alltagsschuh).

Im Dokument DE 20 2018 000 884 U1 ist ein Sneaker mit einer gepolsterten Schuhzunge und zusätzlichen seitlichen Polstern beschrieben. Es sind Rallystreifen aus Kunststoff in silbermetallic für das Design vorgesehen. Die Fußspitze ist nach vorne abgeschrägt und mit den Rallystreifen überzogen.

### Zusammenfassung

Aufgabe der Erfindung ist es, einen Sneaker sowie eine Schuhsohle für einen Sneaker anzugeben, mit denen für den Träger verbesserte Gebrauchseigenschaften bereitgestellt sind.

Zur Lösung sind ein Sneaker sowie eine Schuhsohle für einen Sneaker nach den Schutzansprüchen 1 und 13 geschaffen. Ausgestaltungen sind Gegenstand von abhängigen Schutzansprüchen.

Nach einem Aspekt ist ein Sneaker mit einem Oberteil und einer Schuhsohle geschaffen, die mit dem Oberteil verbunden ist und eine Laufsohle aufweist, die aus einem geschäumten thermoplastischen Polyurethanmaterial mit einer Shore-Härte A im Bereich von etwa 25 bis etwa 55 besteht.

Nach einem weiteren Aspekt ist eine Schuhsohle für einen Sneaker mit einer Laufsohle aus einem geschäumten thermoplastischen Polyurethanmaterial mit einer Shore-Härte A im Bereich von etwa 25 bis etwa 55 geschaffen.

Mittels Verwendung des geschäumten thermoplastischen Polyurethanmaterials, welches die vorgesehene Shore-Härte aufweist, ist eine Laufsohle bereitgestellt, die einerseits ein angenehm weiches Laufgefühl vermittelt. Andererseits verfügt das vorgesehene Laufsohlenmaterial über eine ausreichende Widerstandsfähigkeit und Langlebigkeit beim Gebrauch des Sneakers beim Alltagsgebrauch.

Die Schuhsohle, welche auch als Schuhboden bezeichnet wird, kann aus mehreren Lagen / Schichten bestehen. An der Laufsohle ist unterseitig die Lauffläche bereitgestellt. Eine mögliche Aufteilung oder Schichtung der Schusohle (vom Fuß in Richtung Untergrund und oberhalb der Laufsohle) kann weiterhin eine oder mehrere der folgenden Sohlen oder Schichten aufweisen: Deck(brand)sohle oder Teildeck(brand)sohle, Brandsohle (Innensohle), Ausballung (Material zur Einebnung der Fläche, das zugleich als Dämpfung und Isolierung dient) und Zwischensohle.

In einer Ausführung besteht die Schuhsohle des Sneakers aus der Laufsohle aus dem geschäumten thermoplastischen Polyurethanmaterial mit einer Shore-Härte A im Bereich von etwa 25 bis etwa 55 und einer hierauf deckseitig (zum Fuß des Schuhnutzers hin) angeordneten Strobelsohle, die aufgeklebt sein kann.

An der Laufsohle kann ein außen vollständig umlaufender und sich von der Laufsohle noch oben erstreckender (vor- oder abstehender) (Sohlen)Rand mit einer Randhöhe von wenigstens etwa 18mm einstückig angeformt sein, wobei der Rand aus dem geschäumten thermoplastischen Polyurethanmaterial mit der Shore-Härte A im Bereich von etwa 25 bis etwa 55 besteht. Die Randhöhe kann etwa 18 mm bis etwa 25mm betragen.

Das geschäumte thermoplastische Polyurethanmaterial kann alternativ eine Shore-Härte A im Bereich von etwa 30 bis etwa 45 aufweisen. In einer Ausgestaltung kann die Shore-Härte A im Bereich von etwa 32 bis etwa 38 liegen, beispielsweise bei etwa 35.

Die Laufsohle kann eine Sohlendicke oder -höhe (Wanddicke) im Bereich von etwa 2 mm bis etwa 4 mm aufweisen. Die Laufsohle kann alternativ eine Sohlendicke im Bereich von etwa 2,5 mm bis etwa 3,5 mm aufweisen.

Die Laufsohle kann eine unter- oder außenseitige Profilierung aufweisen.

Die Profilierung kann mit einer Profilhöhe im Bereich von etwa 2 mm bis etwa 6 mm gebildet sein. Alternativ kann die Profilhöhe im Bereich von etwa 2,5 mm bis etwa 4,5 mm liegen.

Das geschäumte thermoplastische Polyurethanmaterial kann mindestens einen Zusatzstoff enthalten. Zum Herstellen der Laufsohle wird als Ausgangsmaterial ein thermoplastisches Polyurethan verwendet, welches mit einem oder mehreren Treibmitteln versetzt wird, um das thermoplastische Polyurethan dann in üblicher Weise aufzuschäumen. Hierdurch entsteht das geschäumte thermoplastische Polyurethanmaterial, was auch als leichtes thermoplastisches Polyurethan (LPTU) bezeichnet wird. Es entsteht so eine gewichtsreduzierte Schuhsohle aus geschäumtem Material.

Das geschäumte thermoplastische Polyurethanmaterial kann einen die Abriebfestigkeit erhöhenden Zusatzstoff enthalten. Zusatzstoffe, die die Abriebfestigkeit des geschäumten thermoplastischen Polyurethanmaterials erhöhen, sind als solche in verschiedenen Ausführungsformen bekannt. Beispielsweise bietet die Firma BASF einen solchen Zusatzstoff unter der Bezeichnung "V2887" an. Der eine oder die mehreren Zusatzstoffe werden beim Herstellen dem Ausgangsmaterial zusammen mit dem Treibmittel dem thermoplastischen Polyurethan beigemischt.

Das Oberteil kann aus wenigstens einem Obermaterial aus der folgenden Gruppe von Materialien sein: Naturleder, Kunstleder, Kunststoff und Fasermaterial.

Der Sneaker kann als Alltagsschuh ausgeführt sein, wozu der sich von der Laufsohle randseitig nach oben erstreckende oder vorstehende Rand beitragen kann.

Die Laufsohle mit dem noch oben stehenden Rand kann einstückig als Spritzgussteil hergestellt werden.

Die vorangehend im Zusammenhang mit dem Sneaker erläuterten Ausgestaltungen können in Verbindung mit der Schuhsohle für den Sneaker entsprechend vorgesehen sein.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische Darstellung eines Sneakers von der Seite;
- Fig. 2: eine schematische Darstellung des Sneakers aus Fig. 1 von unten und
- Fig. 3: eine schematische Darstellung einer Laufsohle für einen Sneaker von der Seite.

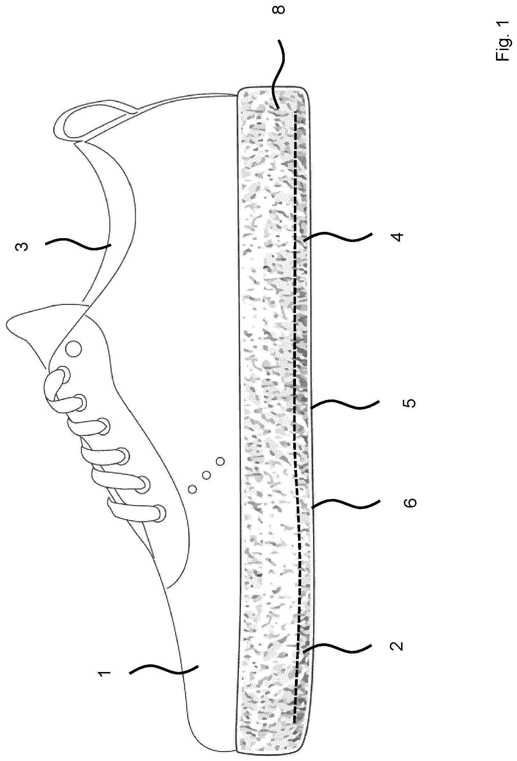

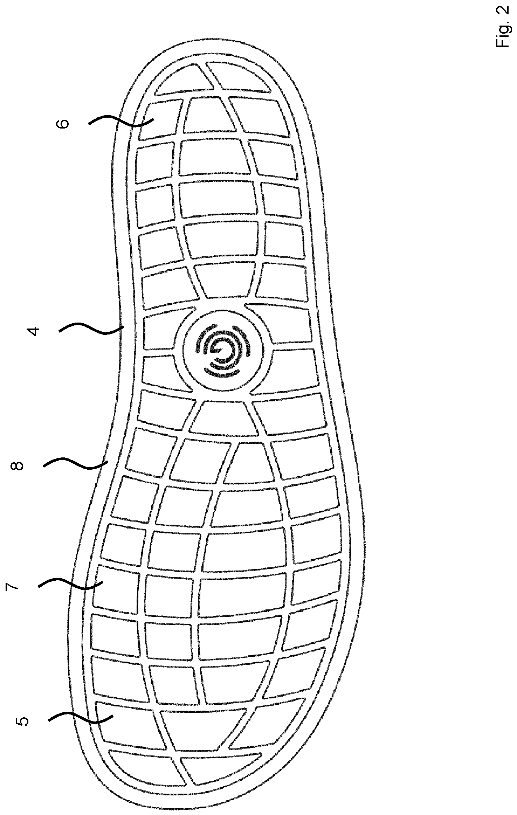

Fig. 1 und 2 zeigen schematische Darstellungen eines Sneakers 1 in Ausführung als Alltagsschuh mit einer Schuhsohle 2 und hieran angebrachtem Oberteil 3, was zum Beispiel mittels Kleben und / oder Nähen ausgeführt sein kann. Die Schuhsohle 2 weist eine Laufsohle 4 auf, die in Fig. 1 schematisch mittels einer Strichlinie angedeutet ist und aus einem geschäumten thermoplastischen Polyurethanmaterial mit einer Shore-Härte A im Bereich von etwa 25 bis etwa 55 besteht, wahlweise in einem Bereich von etwa 30 bis etwa 45, zum Beispiel bei etwa 35. Die Shore-Härte des geschäumten thermoplastischen Polyurethanmaterials kann in diesem Bereich variiert werden, indem zum Beispiel unterschiedliche thermoplastische Polyurethanmaterialien als Ausgangsstoff verwendet werden.

Die Laufsohle 4 weist in dem gezeigten Ausführungsbeispiel eine Wand- oder Sohlendicke von etwa 3 mm auf. Auf einer Unterseite 5 ist für eine Lauffläche 6 eine Profilierung 7 vorgesehen, die eine Profilhöhe von etwa 3 mm aufweist. Die Profilhöhe kann allgemein in einem Bereich von etwa 2 mm bis etwa 6 mm liegen.

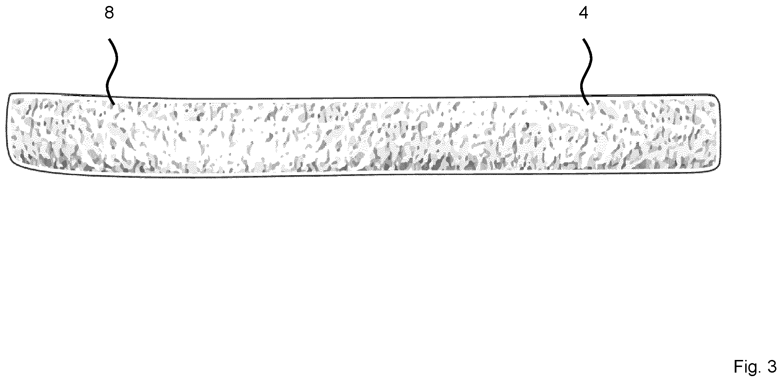

Fig. 3 zeigt die Laufsohle 4 vor dem Verbinden mit dem Oberteil 3 von der Seite. An der Laufsohle 4 ist umlaufend durchgehend ein Rand 8 einstückig angeformt, welcher von der Laufsohle 4 nach oben ab- oder vorsteht. Der Rand 8 weist zum Beispiel (ausgehend von der Lauffläche) eine Randhöhe von etwa 18mm bis etwa 25mm auf.

Die in der vorstehenden Beschreibung, den Schutzansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Sneaker (1), mit
- einem Oberteil (3) und
- einer Schuhsohle (2), die mit dem Oberteil (3) verbunden ist und eine Laufsohle (4) aufweist, die aus einem geschäumten thermoplastischen Polyurethanmaterial mit einer Shore-Härte A im Bereich von etwa 25 bis etwa 55 besteht.

2. Sneaker (1) nach Anspruch 1, **dadurch gekennzeichnet, dass** an der Laufsohle (4) ein außen vollständig umlaufender und sich von der Laufsohle (4) noch oben erstreckender Rand (8) mit einer Randhöhe von wenigstens etwa 18mm einstückig angeformt ist, wobei der Rand (8) aus dem geschäumten thermoplastischen Polyurethanmaterial mit der Shore-Härte A im Bereich von etwa 25 bis etwa 55 besteht.

3. Sneaker (1) nach Anspruch 1 oder 2, **dadurch gekennzeichnet, dass** das geschäumte thermoplastische Polyurethanmaterial eine Shore-Härte A im Bereich von etwa 30 bis etwa 40 aufweist.

4. Sneaker (1) nach mindestens einem der vorangehenden Ansprüche, **dadurch gekennzeichnet, dass** die Laufsohle (4) eine Sohlendicke im Bereich von etwa 2 mm bis etwa 4 mm aufweist.

5. Sneaker (1) nach Anspruch 4, **dadurch gekennzeichnet, dass** die Sohlendicke im Bereich von etwa 2,5 mm bis etwa 3,5 mm liegt.

6. Sneaker (1) nach mindestens einem der vorangehenden Ansprüche, **dadurch gekennzeichnet, dass** die Laufsohle (4) eine unterseitige Profilierung (7) aufweist.

7. Sneaker (1) nach Anspruch 6, **dadurch gekennzeichnet, dass** die Profilierung (7) mit einer Profilhöhe im Bereich von etwa 2 mm bis etwa 6 mm gebildet ist.

8. Sneaker (1) nach Anspruch 7, **dadurch gekennzeichnet, dass** die Profilhöhe im Bereich von etwa 2,5 mm bis etwa 4,5 mm liegt.

9. Sneaker (1) nach mindestens einem der vorangehenden Ansprüche, **dadurch gekennzeichnet, dass** das geschäumte thermoplastische Polyurethanmaterial mindestens einen Zusatzstoff enthält.

10. Sneaker (1) nach Anspruch 9, **dadurch gekennzeichnet, dass** das geschäumte thermoplastische Polyurethanmaterial einen die Abriebfestigkeit erhöhenden Zusatzstoff enthält.

11. Sneaker (1) nach mindestens einem der vorangehenden Ansprüche, **dadurch gekennzeichnet, dass** das Oberteil (3) aus wenigstens einem Obermaterial aus der folgenden Gruppe von Materialien ist: Naturleder, Kunstleder, Kunststoff und Fasermaterial.

12. Sneaker (1) nach mindestens einem der vorangehenden Ansprüche, **dadurch gekennzeichnet, dass** die aus der Laufsohle und einer hierauf deckseitig angeordneten Strobelsohle besteht.

13. Sneaker (1) nach mindestens einem der vorangehenden Ansprüche, ausgeführt als Alltagsschuh.

14. Schuhsohle (2) für einen Sneaker (1), mit einer Laufsohle (4) aus einem geschäumten thermoplastischen Polyurethanmaterial mit einer Shore-Härte A im Bereich von etwa 25 bis etwa 55.
